# EUROPEAN PATENT APPLICATION

(11) **EP 1 315 102 A2**
(43) Date of publication of application: **28.05.2003**
(21) Application number: 02258036.9
(22) Date of filing: 21.11.2002
(51) Int. Cl.: G06F 17/30, H04N 1/00

(54) **A context-aware imaging device**

(30) Priority: 21.11.2001 US 989181
(71) Applicant: Hewlett-Packard Company, Palo Alto, CA 94304 (US)
(72) Inventor: Burg, Bernard, Menlo Park, CA 94025 (US); Sayers, Graig ., Menlo Park, CA 94025 (US)
(74) Representative: Powell, Stephen David

(57) **Abstract**

A context-aware imaging device (10) includes an image capturing and display system having an image capturing system (11) that captures an image containing a landmark of interest, and an image display (12) that displays the captured image. A context interpretation engine (13) is provided to generate contextual information relating to the landmark. A context rendering module (14) is coupled to the context interpretation engine to render the contextual information to the user of the imaging device. All modules of the context-aware imaging device form a physically integrated unit.

## Description

The present invention pertains to imaging or viewing devices (e.g., telescopes or cameras). More particularly, this invention relates to a context-aware imaging or viewing device that can *recognize* or *identify* a landmark being viewed by a viewer through the imaging device, and provide contextual information of the landmark.

Imaging (or viewing) devices typically refer to those devices through which a viewer can view and/or record a landmark of interest. These devices typically include binoculars, telescopes, cameras, and even eyeglasses. The term *landmark* typically refers to building, building complex, wall, castle, palace, temple/church, mosque, billboard, statue, road, freeway/highway, railway, bridge, harbor, airport, bus/rail/underground station, monument, mountain, rock, tree, forest, island, ocean, sea, bay, strait, river, lake, creek, reservoir, or dam, etc. As a matter of fact, the term *landmark* hereinafter refers to any natural or man-made physical object or point of interest on earth.

Binoculars and telescopes typically include optical arrangements (e.g., lenses and/or mirrors) that can make distant landmarks appear nearer and larger to their viewers. This means that binoculars and telescopes are typically used to observe distant landmarks. They can capture images of distant landmarks and then present the captured images clearly to their viewers. Binoculars and telescopes can have fixed lenses or variable lenses (i.e., zoom lenses).

Eyeglasses are typically in the form of a pair of optical lenses mounted on a frame. The main function of eyeglasses is to correct faulty visions (e.g., near-sight or far-sight) by making images focused at the eyes of the persons who wear the glasses. Binoculars, telescopes, and eyeglasses are passive imaging devices in that they do not record any image.

Similar to binoculars and telescopes, cameras also include the optical arrangements that can present landmarks to its viewers. Cameras may also include lenses that can make distant landmarks appear nearer and larger to their viewers. The lenses can be fixed lenses or zoom lenses. However and unlike binoculars and telescopes, the main function of a camera is to record images captured by its optical arrangements on some media (e.g., film, video tape, or electronic storage module). The recorded images can be in the form of still pictures or moving pictures.

There are different kinds of cameras. A conventional camera records images on films. A video camera can record images on video tapes. A digital camera can record images digitally and stores the digital images on electronic storage media (e.g., flash memory card).

As is known, disadvantages are associated with the existing imaging devices. One disadvantage is that such a prior art imaging device only passively brings and presents captured images containing various landmarks to its viewer. It cannot help recognize or identify any landmark at which the viewer is looking using the device. In other words, these existing imaging devices do not have any intelligence in recognizing or identifying landmarks at which the users of the devices (i.e., the viewers) are looking via the devices.

The fact that the existing imaging devices contain no intelligence means that these devices do not provide contextual information of a landmark when it is being viewed by a viewer using any of the existing imaging devices. Contextual information of a landmark means text (or audio) information relating to or describing the corresponding landmark. Basic contextual information of a landmark typically includes name of the landmark (e.g., the Crater Lake, the Yellow Stone National Park, or the Eiffel Tower), geographical information of the landmark, and description of the landmark. The contextual information may also include information relating to services (e.g., hotels, restaurants, shops, gas stations, entertainments, transportation, information desks, gas stations, banks, postal services, etc.) provided at the site of the landmark. When the existing imaging devices do not contain the capability of providing contextual information of the landmarks that are viewed through the devices, the devices do not provide any help or aid to a person in an unfamiliar area equipped with the prior art imaging devices.

One feature of the present invention is to provide help to people in an unfamiliar area.

Another feature of the present invention is to provide help to a person in an unfamiliar area by providing contextual information of landmarks around the person.

A further feature of the present invention is to provide an intelligent imaging device that can recognize or identify landmarks around the viewer of the device.

A still further feature of the present invention is to provide an intelligent imaging device that can provide contextual information of the landmark at which the viewer of the device is looking via the device.

In accordance with one embodiment of the present invention, a context-aware imaging device is described. The device includes an image capturing and display system that captures and displays an image containing a landmark of interest. A context interpretation engine is provided to generate contextual information relating to the landmark. The image capturing and display system and the context interpretation engine form a physically integrated unit.

In accordance with another embodiment of the present invention, a context-aware imaging device includes an image capturing system that captures an image containing a landmark of interest. An image display displays the captured image. A context interpretation engine is provided to generate contextual information relating to the landmark. A context rendering module is coupled to the context interpretation engine to render the contextual information to the user of the imaging device. The image capturing system, the display, the context interpretation engine, and the context rendering module form a physically integrated unit. Thus, the image capturing and display system and the context interpretation engine may reside inside a single enclosure. Alternatively, the image capturing and display system and the context interpretation engine may reside in different enclosures, but still physically attached to each other to form the physically integrated unit. In a further alternative modules of the context interpretation engine reside in different enclosures, and have intermittent connectivity with each other.

The context interpretation engine may comprise one of the following combinations:
an area determination system that determines the geographical information of the landmark;
a landmark database that stores geographical information of landmarks and their corresponding contextual information to provide the contextual information of the landmark if accessed with the geographical information of the landmark.

The area determination system may comprise one of the following combinations:
(i) a location sensor that provides location information of the imaging device;
   a context interpreter that generates the geographical information of the landmark by defining the segmented viewing volume within which the landmark is located using the location, the direction, and the orientation information.
(ii) a location sensor that provides location information of the imaging device;
   an orientation sensor that determines the direction in which the image capturing and display system is aiming;
   a zoom sensor that determines the viewing angle of the image capturing and display system;
   a context interpreter that generates the geographical information of the landmark by defining a segmented viewing volume within which the landmark is located using the location, the viewing direction, and the zoom information provided by the sensors.
(iii) a location sensor that provides location information of the imaging device;
   a distance sensor that determines the distance to the landmark from the image capturing and display system;
   a context interpreter that generates the geographical information of the landmark from the location and distance information provided by the sensors.
(iv) a location sensor that provides location information of the imaging device;
   an orientation sensor that determines the direction in which the image capturing and display system is aiming;
   a distance sensor that determines the distance from the image capturing and display system to the landmark;
   a context interpreter that generates the geographical information of the landmark from the location, the viewing direction, and the distance information provided by the sensors.
(v) an image feature extractor that extracts searchable image features from the landmark in the captured image;
   a context interpreter that uses the image features to search the landmark database for any landmark image with matching image features.
(vi) a location sensor that provides location information of the imaging device;
   an image feature extractor that extract searchable image features from the landmark in the captured image;
   a context interpreter that uses the image features and the location information to search the landmark database for any landmark image with matching image features and similar location information.
(vii) an orientation sensor that determines the direction in which the image capturing and display system is aiming;
   an image feature extractor that extracts searchable image features from the landmark in the captured image;
   a context interpreter that uses the image features and the direction information to search the landmark database for any landmark image with matching image features and along the same direction.
(viii) a zoom sensor that determines the viewing scope of the image capturing and display system;
   an image feature extractor that extracts searchable image features from the landmark in the captured image;
   a context interpreter that uses the image features and the viewing scope information to search the landmark database for any landmark image with matching image features and within the viewing scope specified by the zoom sensor.
(ix) a distance sensor that determines the distance from the image capturing and display system to the landmark;
   an image feature extractor that extracts searchable image features from the landmark in the captured image;
   a context interpreter that uses the image features and the distance information to search the landmark database for any landmark image with matching image features and within the distance specified by the distance sensor.
(x) a zoom and distance sensor that determines the projection angle of the image capturing and display system, and the distance from the image capturing and display system to a geographical point at which the image capturing and display system is focused;
   an image feature extractor that extracts searchable image features from the landmark in the captured image;
   a context interpreter that uses the image features, the projection angle and the distance information to search the landmark database for any landmark image with matching image features and within the projection angle and distance specified by the zoom and distance sensor.
(xi) a location sensor that provides location information of the imaging device;
   an orientation sensor that determines the direction in which the image capturing and display system is aiming;
   a zoom and distance sensor that determines the projection angle of the image capturing and display system, and the distance from the image capturing and display system to a geographical point at which the image capturing and display system is focused;
   an image feature extractor that extracts searchable image features from the landmark in the captured image;
   a context interpreter that uses the image features, the projection angle and the distance information to search the landmark database for any landmark image with matching image features and within the projection angle and distance specified by the zoom and distance sensor.

Other features and advantages of the present invention will become apparent from the following detailed description, taken in conjunction with the accompanying drawings, illustrating by way of example the principles of the invention.

Figure 1 illustrates a context-aware imaging device that implements one embodiment of the present invention, wherein the imaging device includes an image sensor, a display, a context interpretation engine, and a context rendering module.

Figure 2 shows the structure of the context interpretation engine of Figure 1, including a context interpreter, an area determination system that includes various sensors, a user interface, a landmark database, a storage, and an updating module.

Figures 3A and 3B show in flowchart diagram form the process of the context interpreter of Figure 2.

Figure 4 shows the structure of the updating module of Figure 2.

Figure 5 shows the structure of the context interpretation engine of Figure 1 in accordance with another embodiment of the present invention.

Figure 6 shows the structure of the context interpretation engine of Figure 1 in accordance with yet another embodiment of the present invention.

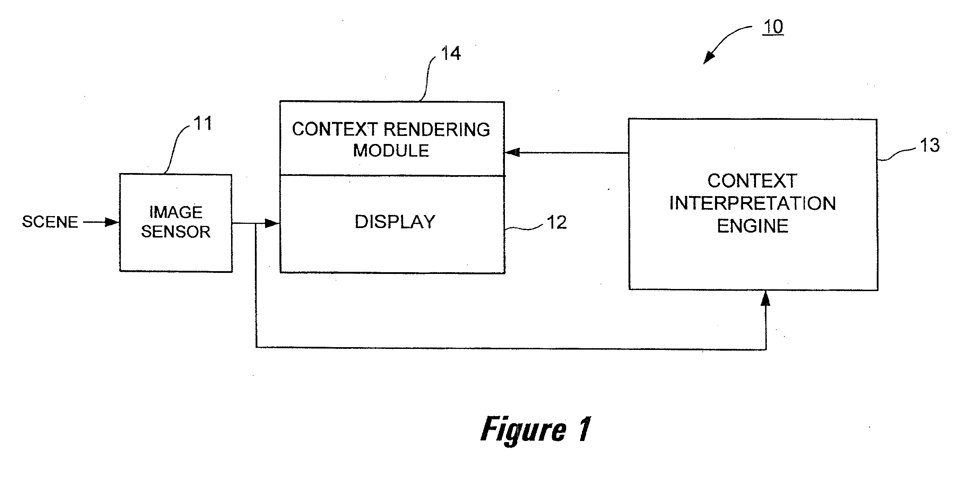

Figure 1 shows a context-aware imaging device 10 that implements one embodiment of the present invention. The context-aware imaging device 10 may also be referred to as a context-aware viewing device because one of the functions of the device 10 is to allow a viewer to employ the device 10 to see or record a landmark. In accordance with one embodiment of the present invention, the context-aware imaging device 10 provides contextual information of the landmark captured by the context-aware imaging device 10. The contextual information describes the landmark, thus helping the viewer of the imaging device 10 to recognize or know the landmark. This allows the context-aware imaging device 10 to provide help to people in an unfamiliar area. This also allows the context-aware imaging device 10 to become an intelligent imaging device that can recognize or identify the landmark at which the viewer of the device is looking via the device.

As described above, the term *landmark* refers to building, building complex, wall, castle, palace, temple/church, mosque, billboard, statue, road, freeway/highway, railway, bridge, harbor, airport, bus/rail/underground station, monument, mountain, rock, tree, forest, island, ocean, sea, bay, strait, river, lake, creek, reservoir, or dam, etc. As a matter of fact, the term *landmark* hereinafter refers to any natural or man-made physical object or point of interest on earth.

As also described above, the contextual information of a landmark means information relating to or describing the corresponding landmark. Basic contextual information of a landmark typically includes name of the landmark (e.g., the Crater Lake, the Yellow Stone National Park, or the Eiffel Tower), geographical information of the landmark, and description of the landmark. The geographical information specifies a three-dimensional location (e.g., latitude, longitude, and altitude) of the landmark. The description information of the landmark typically includes information describing the landmark. For example, the description information may contain information about the size, height, and boundary of the landmark, the yearly climate at the landmark, history of the landmark, creation of the landmark, geological formation at the landmark, direction to the landmark, and other descriptions of the landmark.

The contextual information may also include information relating to services (e.g., hotels, restaurants, shops, gas stations, entertainments, transportation, information desks, gas stations, banks, postal services, etc.) provided at the site of the landmark. In addition, the contextual information may include other information or information generated or obtained in real time. For example, the contextual information may include information of the traveling time to the landmark, or the weather at the landmark at the very moment.

In one embodiment, the contextual information is in the form of written text that can be rendered on a display for viewing. In another embodiment, the contextual information is in the form of audio signal stream that can be rendered by an audio player. Alternatively, the contextual information can be in other forms.

The context-aware imaging device 10 can be implemented in various forms. In one embodiment, the context-aware imaging device 10 is implemented as a context-aware binoculars or telescope device. In another embodiment, the context-aware imaging device 10 is implemented as a context-aware camera. In this case, the camera can be a conventional camera, a video camera, or a digital camera. Alternatively, the context-aware imaging device 10 can be implemented as other type of context-aware imaging device. For example, the context-aware imaging device 10 can be a pair of context-aware eyeglasses, a computer system or PDA (Personal Digital Assistant) equipped with a digital camera, or a cellular phone with a digital camera.

As can be seen from Figure 1, the context-aware imaging device 10 includes an image sensor 11 and a display 12. These two modules 11 and 12 together perform the conventional image capturing function of the context-aware imaging device 10 to capture and present an image containing a landmark of interest to the viewer of the imaging device 10. This means that the image sensor 11 and the display 12 form the image capturing and display sub-system of the device 10. Each of the modules 11-12 can be implemented using any known imaging or viewing technology. The structure and function of each of the modules 11-12 are known to an ordinary person skilled in the art, and are device-specific. For example, if the context-aware imaging device 10 is a context-aware telescope, the modules 11-12 are implemented using the conventional optical arrangements for a telescope. Thus, the modules 11-12 will not be described in more detail below.

In accordance with one embodiment of the present invention, the context-aware imaging device 10 includes a context interpretation engine 13 and a context rendering module 14. The context interpretation engine 13 is used to generate the contextual information of the landmark captured by the image sensor 11 of the imaging device 10. This means that the context interpretation engine 13 first recognizes the landmark captured by the image sensor 11, and then retrieves the corresponding contextual information of the *recognized*/*identified* landmark. The context rendering module 14 then renders the contextual information to the viewer/user of the device 10. And it also attaches the geographical and contextual information into the captured image. The image sensor 11, the display 12, the context interpretation engine 13, and the context rendering module 14 form a physically integrated unit.

In one embodiment, all of the modules 11-14 of the context-aware imaging device 10 reside inside a single enclosure. In another embodiment, the modules 11-14 may reside in different enclosures, but still physically attached to each other to form the integrated unit. In another embodiment, the context interpretation engine 13 has its modules in separate enclosures, and with intermittent connectivity. For example, rather than having its own location sensor, the context interpretation engine 13 rely on a nearby location sensor (e.g., a GPS sensor located in the user's car or cell phone). The context-aware imaging device 10 will be described in more detail below, also in conjunction with Figures 1 through 5.

Referring again to Figure 1, the context rendering module 14 is used to render the contextual information supplied from the context interpretation engine 13 to the user of the device 10. The context rendering module 14 can be implemented either as a display to display the contextual information to the user of the device 10, or as an audio player that audibly outputs the contextual information through a speaker.

In one embodiment, the context rendering module 14 is a display separated from the display 12. In another embodiment, the context rendering module 14 is overlaid with the display 12. This means that the display 12 includes a display area as the rendering module 14 for displaying the contextual information. In this case, the contextual information can be displayed above, below, or side-by-side with the displayed landmark. In a further embodiment, the context rendering module 14 is implemented by an audio playback system.

As described above, the context interpretation engine 13 is used to recognize or identify the landmark displayed on the display 12, and then to provide the corresponding contextual information of the landmark. The database 25 is searchable through the geographical information of the landmarks. This means that when accessed with the geographical information of a landmark, the landmark database finds a landmark having the same geographical information, and obtains the corresponding contextual information.

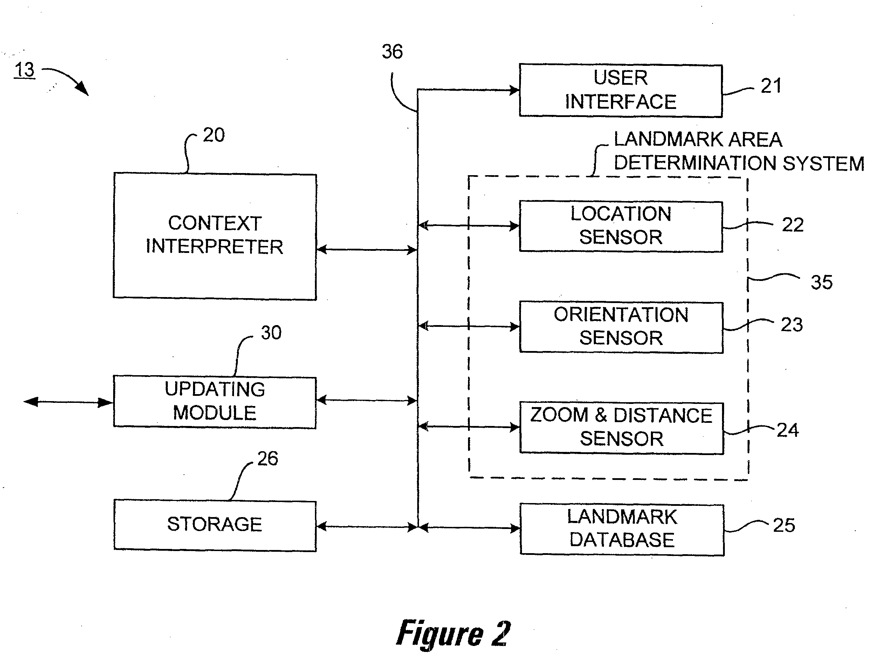

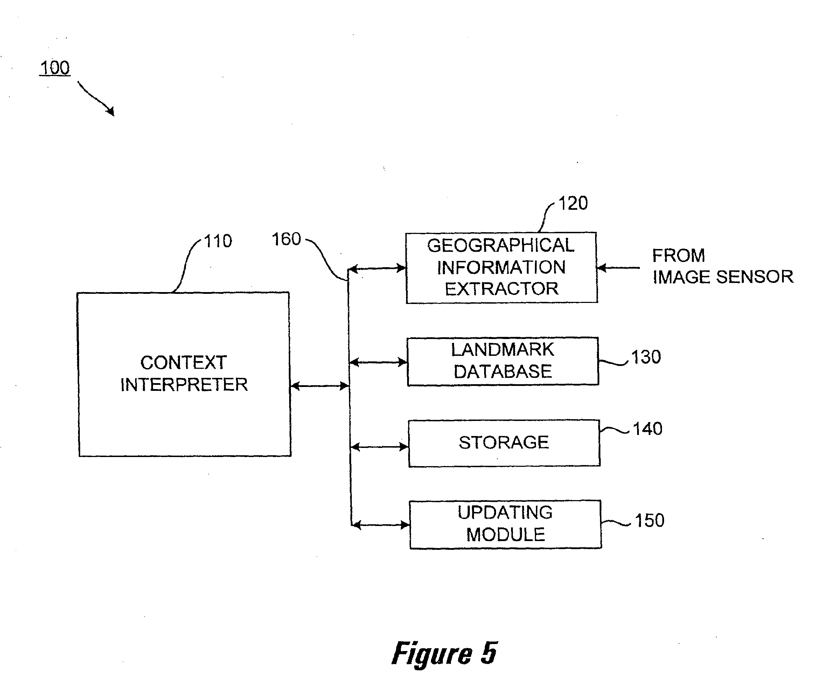

Then the context interpretation engine 13 determines the geographical information of the displayed landmark in the display 12 of the imaging device 10. This is implemented in a number of ways. One way is to have a number of sensors (i.e., sensors 22-24 in Figure 2). Another way is to have a geographical information extractor (i.e., the extractor 120 in Figure 5). In this case, the image sensor 11 of Figure 1 is also used to obtain geographical information. Another way is to combine searches based on geographical information with image-based searches. In this case, an image feature extractor is used to extract a set of searchable image features from the landmark image. The image features are then used to search a landmark database that is also indexed by the image features of the landmarks. These embodiments will be described in more detail below, also in conjunction with Figures 2-5. With the geographical information of the landmark, the context interpretation engine 13 searches its landmark database with the geographical information of the landmark to obtain the contextual information of the landmark.

Figure 2 shows in more detail the structure of the context interpretation engine 13 of Figure 1 in accordance with one embodiment of the present invention. As can be seen from Figure 2, the context interpretation engine 13 includes a context interpreter 20, a user interface 21, a landmark area determination system 35, a landmark database 25, a storage 26, and an updating module 30. All of the above-mentioned modules 20-21, 25-26, 30 and 35 are connected or operatively coupled together via a bus 36.

The landmark database 25 can store geographical information of all, most, or some landmarks on earth. In one embodiment, the landmark database 25 stores geographical information of all or most landmarks on earth. In another embodiment, the landmark database 25 stores geographical information of all landmarks within a particular local area (e.g., the San Francisco Bay Area). The landmark database 25 also stores the associated contextual information of each of the landmarks. The landmarks are searchable with their geographical information. This means that the landmark database 25 provides the contextual information of a landmark if accessed with the geographical information of that landmark. The landmark database 25 can be implemented using any known database technology.

The landmark area determination system 35 is formed by a location sensor 22, an orientation sensor 23, and a zoom/distance sensor 24. The location sensor 22 determines the location of the image sensor 11 of Figure 1. The orientation sensor 23 determines the viewing direction and the orientation of the image sensor 11 of Figure 1. In the case, the orientation information provided by the orientation sensor 23 may include vertical (i.e., pitch), horizontal (i.e., yaw), and rotational (i.e., roll). In one embodiment, the orientation sensor 23 provides the vertical orientation. In another embodiment, the orientation sensor 23 provides the vertical and horizontal orientation information. In a further embodiment, the orientation sensor 23 provides the vertical, horizontal, and rotational orientation information.

The zoom/distance sensor 24 determines the zoom and distance information. The zoom information determines the projection angle (or projection width) centered along the viewing direction that is originated at the image sensor 11 (Figure 1). This projection angle means the apex (or vertex) angle of a cone originated at the image sensor 11. The distance information defines the distance to the landmark (i.e., focused by the image sensor 11) from the image sensor 11.

The location sensor 22 can be implemented using the Global Positioning System (i.e., GPS). The orientation sensor 23 can be implemented using any known mechanical and/or electrical orientation sensing means. For example, the orientation sensor 23 may include a gravity measuring sensor that includes an unevenly weighted disk with a varying resistive or capacitive encoding around the disk and a compass. This encoding can be easily calibrated and detected with simple electronics. A more sophisticated sensor may involve electronics integrated with parts made using micro-machine technology. The zoom/distance sensor 24 can also be implemented by measuring zoom and focus settings on a lens.

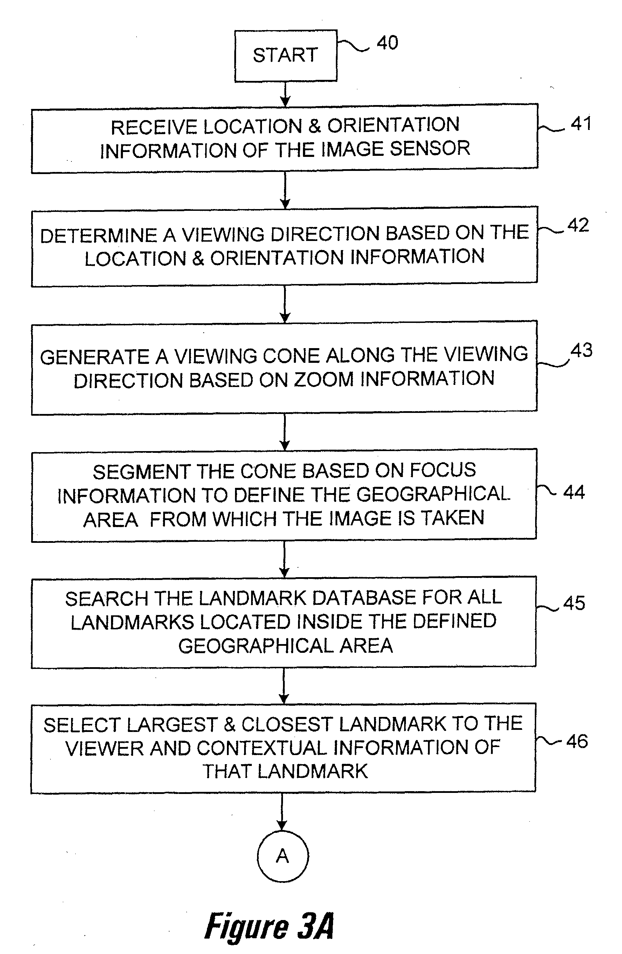

The context interpreter 20 is used to provide the contextual information of the landmark. The context interpreter 20 does this by first receiving the geographical information of the landmark from the sensors 22-24 of the landmark area determination system 35. This geographical information includes location and orientation information of the image sensor 11 (Figure 1), the zoom (i.e., the viewing angle along the viewing direction) information, and the distance (e.g., focus) information. The context interpreter 20 then defines a segmented viewing volume within which the landmark is located using the location, orientation, and zoom and distance information provided by the sensors 22-24. An example of the viewing volume would be a segmented cone. The context interpreter 20 then accesses the landmark database 25 with the geographical information. This causes the landmark database 25 to produce the contextual information of the landmark. In addition and in accordance with one embodiment of the present invention, the context interpreter 20 causes the contextual information to be updated with the most recent information using the updating module 30. The context interpreter 20 may also change the contextual information using the user-specific information stored in the storage 26. For example, instead of displaying the distance to the landmark, the context interpreter 20 may compute and display the traveling time to the landmark based on the walking speed of the user. Figures 3A-3B show in flowchart diagram form the process or operation of generating the contextual information by the context interpreter 20, which will be described in more detail below.

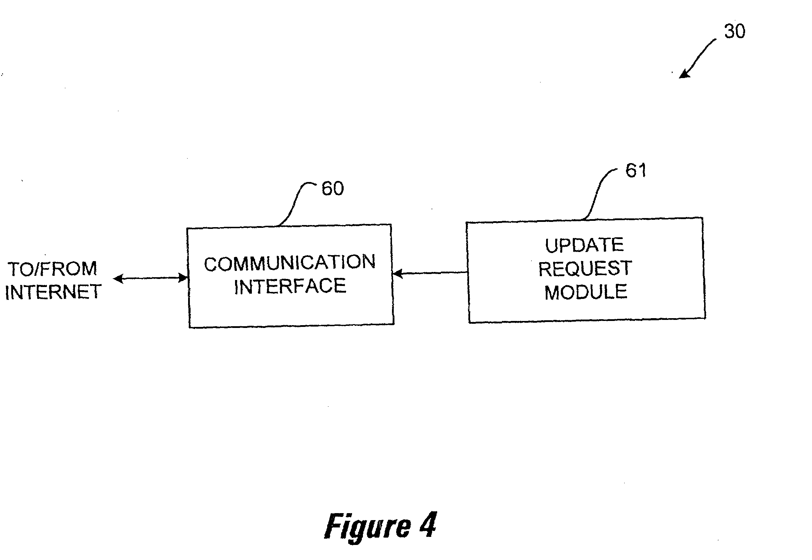

Referring again to Figure 2, the updating module 30 is used to access external source for any real time (or most recent) updates to the retrieved contextual information. The external information source can be an Internet site or web page. As described above, the contextual information of a landmark may include information about services (e.g., restaurants) at the landmark. For example, the contextual information may describe a particular restaurant at the landmark. In this case, the contextual information may also show today's menu and the waiting line at the very moment at the restaurant. These two items of information are date and time specific and thus need to be obtained in real time from the web server of the restaurant. In this case, the updating module 30 generates and sends requests to external Internet sites. This allows the updating module 30 to receive in real time the most recent update of the contextual information. The structure of the updating module 30 is shown in Figure 4, which will be described in more detail below.

Referring again to Figure 2, the storage 26 is used to store user-specific information. The storage 26 can be a volatile or non-volatile memory storage system. The content stored in the storage can include user inputs of user-specific information (e.g., user's walking speed). The storage 26 may also store the captured image of the landmark and its contextual information.

The user interface 21 is used to allow the user or viewer of the imaging device 10 to interact or interface with context interpretation engine 13. For example, the user of the imaging device 10 can input geographical information (e.g., name, location, orientation, zoom, and/or distance information) of a landmark into the context interpretation engine 13 via the user interface. As a further example, the user interface 21 allows the user to input commands (e.g., updating commands) into the context interpretation engine 13. The user interface 21 may include buttons and/or dials. The user interface 21 can be implemented using any known technology.

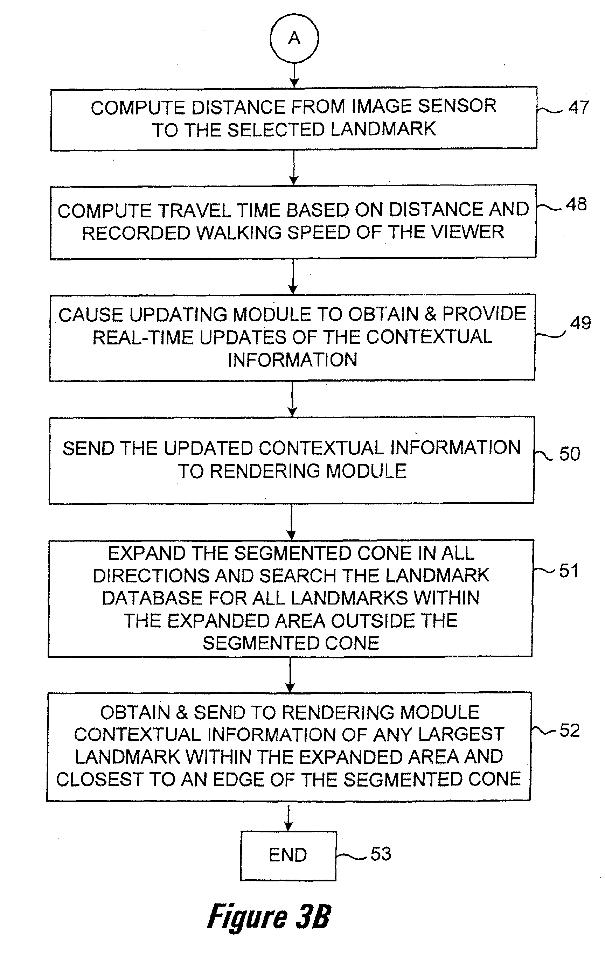

Figures 3A and 3B show in flowchart diagram form the process of the context interpreter 20 of Figure 2. Referring to Figures 2 and 3A-3B, the process starts at the step 40. At the step 41, the context interpreter 20 receives the location and orientation information from the location and orientation sensors 22-23. At the step 42, the context interpreter 20 determines a viewing direction of the image sensor 11 of the imaging device 10 (Figure 1). This is based on the location and orientation information obtained in the context interpreter 20. The context interpreter 20 then generates a viewing volume along the viewing direction based on the zoom information obtained from the zoom/distance sensor 24 at the step 43. The zoom information determines the projection angle or viewing angle centered at the viewing direction.

At the step 44, the context interpreter 20 segments or truncates the viewing volume based on the distance information obtained from the zoom/distance sensor 24 (Figure 2). This segmented or truncated viewing volume defines the geographical area within which the landmark is located. At the step 45, the context interpreter 20 searches the landmark database 25 (Figure 2) for all landmarks located inside the defined geographical area. At the step 46, the context interpreter 20 selects one or more landmarks of interest to the viewer. One embodiment of accomplishing this is to select the largest and closest landmark visible to the user of the imaging device 10. In addition, the context interpreter 20 obtains the contextual information of that selected landmark. The context interpreter 20 then sends the contextual information to the context rendering module 14 (Figure 1). The context interpreter 20 may then end its execution at the step 46.

Alternatively, the context interpreter 20 continues to execute some or all of the following functions. These functions include computing user-specific information (e.g., the traveling time to the landmark from where the imaging device 10 is located), updating the contextual information with real time updates, and determining the contextual information of any landmark outside of and yet close to the edge of the image containing the landmark, They are described as follows.

The steps 47-48 implement the function of computing the user-specific information, at which the context interpreter 20 computes the distance from the image sensor 11 of the imaging device 10 (Figure 1) and then computes the travel time based on the distance and the recorded walking speed of the user of the device 10. That information (i.e., the walking speed) is user-specific and is stored in the storage 26 of Figure 2.

The steps 49-50 implement the function of updating the contextual information retrieved using the updating module 30. The updating module 30 can also update the geographical information stored in the landmark database 25. For example, the updating module 30 can update the current location of a ship or airplane.

The steps 51-52 implement the function of determining the contextual information of any landmark outside of and yet close to the edge of the image containing the landmark. As can be seen from Figure 3B, the context interpreter 20 first expands, at the step 51, the segmented viewing volume in all directions and then searches the landmark database 25 for all landmarks in the expanded geographical area outside the visible volume. The context interpreter 20 then selects, at the step 52, those landmarks which may be of interest to the viewer, but which are not immediately visible in the imaging device 10. This information can be rendered for the viewer so that the viewer knows what would be seen if he/she aims the imaging device 10 at a different direction. One way of accomplishing it would be to select four landmarks, each close to one edge of the visible volume. The context interpreter 20 then obtains the contextual information of the selected landmarks and sends the information to the rendering module 14 (Figure 1). The process then ends at the step 53.

Referring to Figure 4, the structure of the updating module 30 of Figure 2 is shown in more detail. As can be seen from Figure 4, the updating module 30 includes a communication interface 60 and an update request module 61. The communication interface 60 is used to interface with an external communication network (not shown) so that communication can be established for the update request module 61. When communication is established through the communication interface 60, the external communication network connects the updating module 30 to the Internet.

In one embodiment, the communication interface 60 is a wireless communication interface. In this case, the wireless technology employed by the communication interface 60 can be Infrared (e.g., the IrDA technology developed by several companies including Hewlett-Packard Company of Palo Alto, California), ultra-sound, or the low power, high frequency, short-range radio (2.4 - 5 Ghz) transmission (e.g., the Bluetooth technology developed by several telecommunications and electronics companies). In another embodiment, the communication interface 60 is a wire-line communication interface.

The update request module 61 is used to generate and send requests (e.g., Universal Resource Locator) to external Internet sites via the Internet and the communication interface 60. This allows the updating module 30 to receive in real time the most recent update of the contextual information. As described above, the contextual information of a landmark may include information about services (e.g., restaurants) at the landmark. For example, the contextual information may describe a particular restaurant at the landmark. In this case, the contextual information may also show today's menu and the waiting line at the very moment at the restaurant. These two items of information are date and time specific and thus need to be obtained in real time from the Internet server of the restaurant.

As described above and in conjunction with Figure 2, the updating module 30 receives a request to update the contextual information generated by the context interpreter 20 (Figure 2). The request may be generated by the user of the imaging device 10 of Figure 1 through the user interface 21 (Figure 2), or automatically by the context interpreter 20. The request typically specifies the address (e.g., Internet address) of the source of the updates (e.g., web server that stores the updates).

Once the update request module 61 of the updating module 30 receives the request with the address, it generates and sends a request (e.g., Universal Resource Locator) to the external Internet site via the communication interface 61. The update request module 61 generates and sends the request using an open standard communication protocol (i.e., Hyper Text Transport Protocol). Thus, the update request module 61 can also be referred to as the HTTP module. The update request module 61 is like a web browser that does not have the image rendering function.

Figure 5 shows the structure of a context interpretation engine 100 which implements another embodiment of the context interpretation engine 13 of Figure 1. As can be seen from Figures 2 and 5, the difference between the context interpretation engine 100 of Figure 5 and the context interpretation engine 13 of Figure 2 is that the engine 100 of Figure 5 includes a geographical information extractor 120 while the engine 13 of Figure 2 includes the landmark area determination system 35. The function of the geographical information extractor 120 is to extract the geographical information of the landmark from the captured imagery that contains the landmark. In this case, the captured image contains both the landmark and its geographical information. The geographical information extractor 120 is connected to the image sensor 11 of Figure 1. For this to be realized, the image sensor 11 of the imaging device 10 in Figure 1 needs to have the capability to collect the geographical information of the landmark. This means that, for example, a landmark could broadcast its geographical information using a barcode, which is then taken by the image sensor 11. The extractor 120 then extracts the geographical information from the barcode. The geographical information extractor 120 can be implemented using known technology.

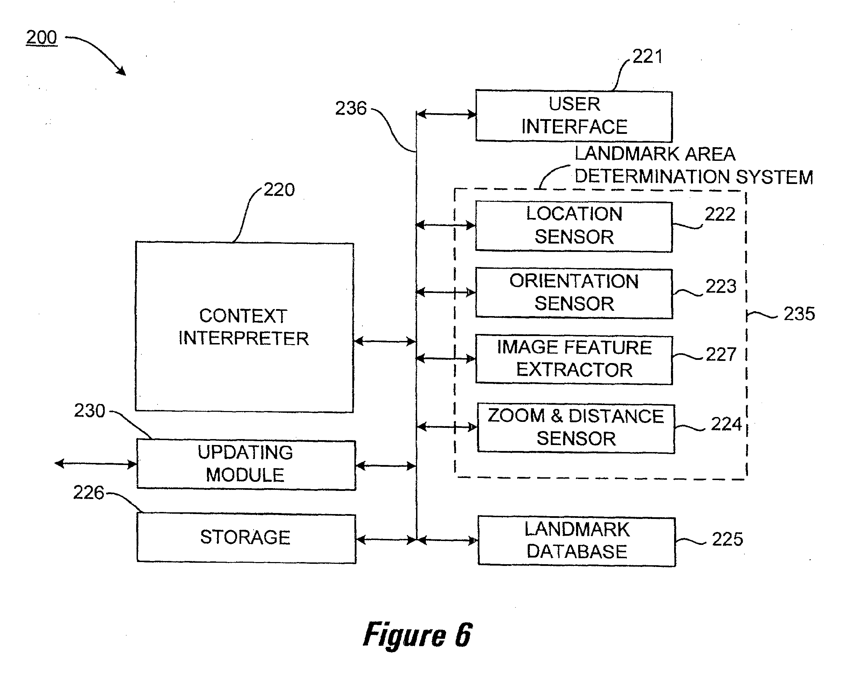

Figure 6 shows the structure of a context interpretation engine 200 which implements yet another embodiment of the context interpretation engine 13 of Figure 1. As can be seen from Figures 2 and 6, the difference between the context interpretation engine 200 of Figure 6 and the context interpretation engine 13 of Figure 2 is that the engine 200 of Figure 6 includes an image feature extractor 227 while the engine 13 of Figure 2 does not. The image feature extractor 227 extracts from the captured landmark image a set of searchable image features. The image features are then used by the context interpreter 220 to search the landmark database 225 for the landmark with the matching set of image features. In this case, the landmark database 225 of Figure 6 is also indexed by the image features of each of the landmarks. This means that the database is searchable through the geographical information of the landmarks, as well as the image features of the landmarks. In this embodiment, the image features can be combined with data from other sensors 222-224 to search the landmark database 225. This will produce better searching result. The image feature extractor 227 can be implemented using any known technology.

In the foregoing specification, the invention has been described with reference to specific embodiments thereof. It will, however, be evident to those skilled in the art that various modifications and changes may be made thereto without departing from the scope of the invention.
The specification and drawings are, accordingly, to be regarded in an illustrative rather than a restrictive sense.

## Claims

1. A context-aware imaging device (10), comprising:
an image capturing and display system (11, 12) that captures and displays an image containing a landmark of interest;
a context interpretation engine (3) that generates contextual information relating to the landmark, wherein the image capturing and display system and the context interpretation engine form a physically integrated unit.

2. The imaging device of claim 1, wherein context interpretation engine generates the contextual information by
determining geographical information of the landmark in the captured image;
searching a landmark database with the geographical information of the landmark to obtain a contextual information of the landmark.

3. The imaging device of claim 1, wherein the context interpretation engine further comprises
an area determination system that determines the geographical information of the landmark;
a landmark database that stores geographical information of landmarks and their corresponding contextual information to provide the contextual information of the landmark if accessed with the geographical information of the landmark.

4. The imaging device of claim 3, wherein the area determination system further comprises a geographical information extractor coupled to the image capturing and display system to extract the geographical information of the landmark from the captured image.

5. The imaging device of claim 4, wherein the image capturing and display system further comprises an image sensor that captures the image with a landmark, wherein the image sensor also collects the geographical information of the landmark and attaches the geographical information to the image.

6. The imaging device of claim 1, wherein the context interpretation engine further comprises an updating module that can provide real time updates to the contextual and geographical information of each of the landmarks stored in the engine.

7. The imaging device of claim 6, wherein the updating module further comprises
a wireless communication interface that establishes wireless communication with external Internet via the wireless communication interface to obtain the real time updates.

8. The imaging device of claim 1, further comprising a context rendering module coupled to the context interpretation engine to render the contextual information relating to the landmark to the user of the imaging device.

9. The imaging device of claim 8, wherein the context rendering module is a display that can be either separated from are overlaid with a display of the image capturing and display system.

10. The imaging device of claim 1, wherein the image capturing and display system can be selected from a group comprising a binoculars system, a telescope system, an eyeglass system, a camera system, a digital camera system, and a video camera system.

11. The imaging device of claim 1, wherein the context interpretation engine further comprises
a user interface that allows user inputs to the context interpretation engine;
a storage that stores user inputs from the user interface, wherein the storage also stores the captured image of the landmark and its contextual information.
